# EUROPEAN PATENT APPLICATION

(11) **EP 2 138 527 A1**
(43) Date of publication of application: **30.12.2009**
(21) Application number: 08158867.5
(22) Date of filing: 24.06.2008
(51) Int. Cl.: C08G 83/00, B82B 3/00

(54) **Nanoparticle, method for producing a nanoparticle, nanoparticle system and its use**

(71) Applicant: Freie Universität Berlin, 14195 Berlin (DE)
(72) Inventor: Haag, Rainer Prof. Dr., 12209 Berlin (DE); Sisson, Adam, 12203 Berlin (DE); Steinhilber, Dirk, 14129 Berlin (DE)
(74) Representative: Baumgärtel, Gunnar

(57) **Abstract**

The invention relates to crosslinked polyglycerol based nanoparticles having a size of more than 10 nm. The invention further relates to a method of preparing such nanoparticles and to their use.

## Description

The invention relates to a nanoparticle according to the preamble of claim 1, a nanoparticle system according to the preamble of claim 6, the use of a nanoparticle system according to claims 8 and 9 and methods for producing a nanoparticle according to the preamble of claims 10 and 11.

More particularly, the invention relates to crosslinked polyglycerol-based nanoparticles and an according nanoparticle system, use and method.

A dendritic architecture (as being present in crosslinked polyglycerol-based nanoparticles) has become well established in chemical synthesis, proving valuable to a range of optical, medical and material applications as well as serving as a scaffold for catalyst/scavenger immobilisation. The branch on branch topology leads to a globular, compact structure with a high density of surface groups. Advantageously, dendritic particles have low viscosity and show less entanglement than linear analogues. However, fully branched perfect dendrimers suffer from tedious syntheses and as such cannot be constructed to nanoscale proportions (i. e. they cannot reach sizes above approximately 10 nm diameter).

A possible solution to generate higher molecular weight materials is to employ hyperbranched polymers which, although incompletely and somewhat randomly branched and polydisperse, may be synthesised in usually one step, and retain the favourable characteristics of perfect dendrimers.

Hyperbranched polyglycerols (HPG) (H. Frey and R. Haag, Rev. Mol. Biotech., 2002, 90, 257; H. Türk, A. Shukla, P. C. A. Rodrigues, H. Rehage and R. Haag, Chem. Eur. J., 2007, 13, 4187) make up one such class of dendritic or 'dendrimer like' polymer, traditionally synthesised by anionic ring opening polymerisation of glycidol (3-hydroxypropylene oxide). HPGs exhibit favourable biocompatibility and have been synthesised up to Mₙ ≈ 1MDa (diameter ≈ 10 nm) with narrow polydispersity and good solubility in polar solvents (R. K. Kainthan, E. B. Muliawan, S. G. Hatzikiriakos, D. E. Brooks, Macromolecules, 2006, 39, 7708; R. K. Kainthan, S. R. Hester, E. Levin, D. V. Devine, D. E. Brooks, Biomaterials, 2007, 28, 4581; R. K. Kainthan, D. E. Brooks, Biomaterials, 2007, 28, 4779). HPGs have been studied for the range of typical applications and may be commercially viable; however the cost of glycidol is prohibitive.

It is an object of the invention to provide larger HPG analogues, particularly crosslinked polyglycerol nanoparticles, having a size which qualifies them for drug delivery and being producible from less cost-intensive starting materials than known from prior art. It is a further object of the invention to provide a simple method to produce such nanoparticles.

This object is achieved by a nanoparticle having the features of claim 1. Such a nanoparticle comprises a plurality of core entities having a structure according to general formula (I) 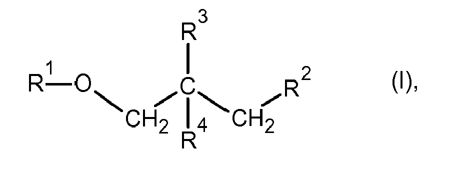 wherein, independently from one core entity to another,
- **R**¹: denotes H or **R**¹⁰⁰,
- **R**²: denotes -OH, -O-**R**²⁰⁰ or a structure of general formula (II)

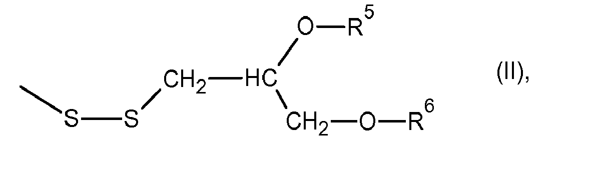

- **R**³: denotes -O-**R**³⁰⁰ or -CH₂-O-**R**³⁰⁰,
- **R**⁴: denotes H, -CH₂-O-**R**⁴⁰⁰ or -CH₂-CH₃,
- **R**⁵: denotes H or **R**⁵⁰⁰,
- **R**⁶: denotes H or **R**⁶⁰⁰,
- **R**¹⁰⁰, **R**²⁰⁰, **R**³⁰⁰, **R**⁴⁰⁰, **R**⁵⁰⁰, **R**⁶⁰⁰: denote independently from each other structures of the general formulae (III) to (V)

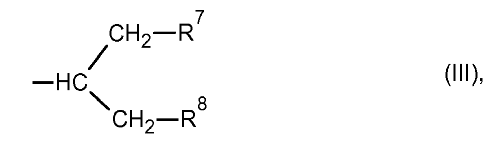

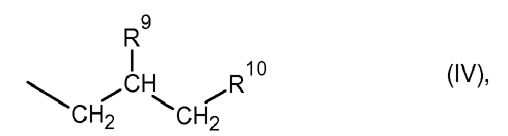

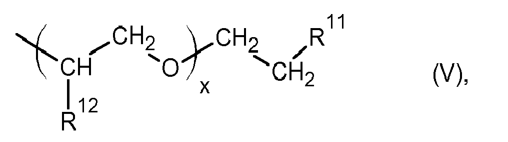

- **R**⁷: denotes -OH, -O-**R**⁷⁰⁰, -O-**R**⁷⁰¹, -O-CH₂-C≡CH, _{-N3},
- **R**⁸: denotes -OH, -O-**R**⁸⁰⁰, -O-**R**⁸⁰¹, -O-CH₂-C≡CH, _{-N3},
- **R**⁹: denotes -OH, -O-**R**⁹⁰⁰, -O-**R**⁹⁰¹, -O-CH₂-C≡CH, _{-N3},
- **R**¹⁰: denotes -OH, -O-**R**¹⁰⁰⁰, -O-**R**¹⁰⁰, -O-CH₂-C≡CH, _{-N3},
- **R**¹¹: denotes -OH, -O-**R**¹¹⁰⁰, -O-**R**¹¹⁰¹, -O-CH₂-C≡CH, _{-N3},
- **R**¹²: denotes H or -CH₃,
- x: is 0 to 100, particularly 1 to 10,

- **R**⁷⁰⁰, **R**⁸⁰⁰, **R**⁹⁰⁰, **R**¹⁰⁰⁰, **R**¹¹⁰⁰: denote independently from each other 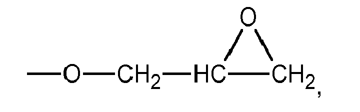
wherein **R**⁷⁰¹, **R**⁸⁰¹, **R**⁹⁰¹, **R**¹⁰⁰¹, **R**¹¹⁰¹ denote independently from each other at least one residue of the same generic structure as **R**¹⁰⁰, **R**²⁰⁰, **R**³⁰⁰, **R**⁴⁰⁰, **R**⁵⁰⁰ or **R**⁶⁰⁰, wherein the meanings of **R**⁷ to **R**¹² may be, within the scope of the afore-mentioned generic meanings, for every single residue identical or different to that of **R**¹⁰⁰, **R**²⁰⁰, **R**³⁰⁰, **R**⁴⁰⁰, **R**⁵⁰⁰ or **R**⁶⁰⁰ so that the core entities are able show diverse degrees of branching and/or substitution and/or diverse types of substitution.

Each core entity is covalently bound to at least one other core entity via a linker entity, wherein the linker entity is formed by reaction of two core entities according to general formula (I), particularly by reaction of an alkyne-terminated core entity with an azide-terminated core entity or of an epoxide-terminated core entity with a hydroxyl-terminated core entity; or by reaction of a core entity with a linker molecule, the linker molecule having a structure according to general formulae (VI) or (VII) 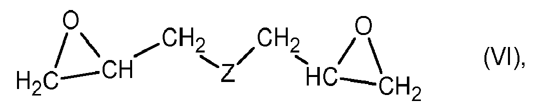 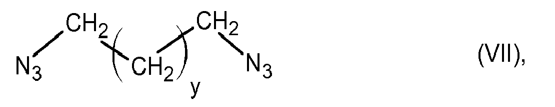 wherein Z denotes -O-, -S-S-, 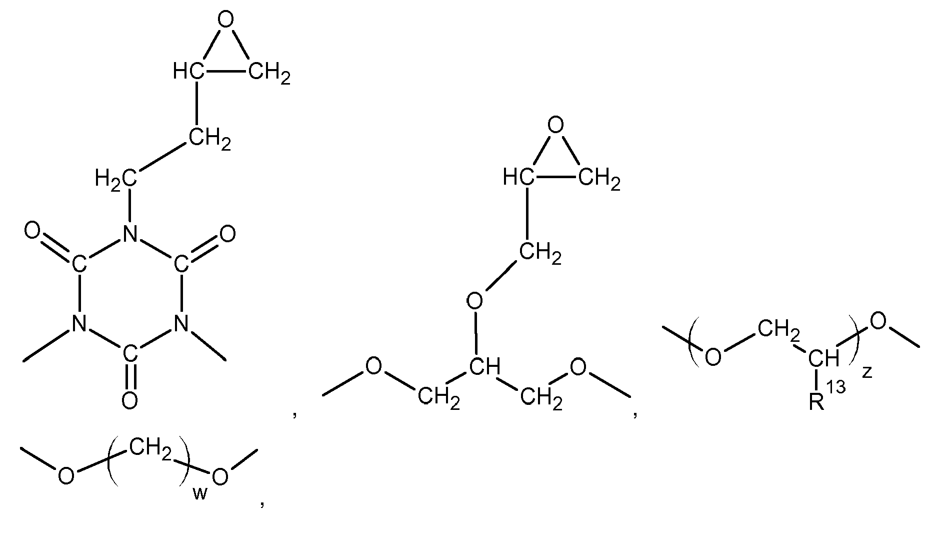 or
**R**¹³ denotes H or CH₃ and
w, y and z are independently from each other 0 to 100, particularly 1 to 10, wherein the nanoparticle has a mean diameter of more than 10 nm, particularly not less than 15 nm or not less than 20 nm. Particularly, the mean diameter is approximately 20 to approximately 100 nm, particularly approximately 20 nm to approximately 120 nm, particularly approximately 20 to approximately 150 nm, particularly approximately 20 nm to approximately 200 nm.

In an alternative embodiment, the mean diameter of the nanoparticle (and thus the average diameter of a plurality of nanoparticles) lies within the range between approximately 25 nm to approximately 90 nm. Other possible upper or lower limits for said diameter range are approximately 15 nm, approximately 30 nm, approximately 40 nm, approximately 45 nm, approximately 50 nm, approximately 60 nm, approximately 65 nm, approximately 75 nm and approximately 85 nm.

For any ranges given herein, the lower and upper limits are always to be understood as included in said range. Thus, e. g., a diameter of 20 nm or of 200 nm lies within a range between 20 and 200 nm.

This size or diameter range is considered to be ideal for drug delivery vehicles that may accumulate in tumour/inflamed tissue by the enhanced permeation and retention effect (EPR). Studies show HPGs to have favourably low toxicity and may be considered in the same class as polyethylene glycols in this regard.

Due to a repetitive linkage of similar or different residues according to general formulae (III) to (V), the single core entities can bear differently branched and/or substituted sections. Also, the core entities can differ from each other. In an alternative embodiment, only homogeneous core entities (having an overall similar content of branching and bearing only a few types or even only a single type of reactive substituent like, e .g., a hydroxyl group) are part of the nanoparticle.

In an alternative embodiment, all core entities of the nanoparticle have substantially an identical structure. In this regard, a structure is considered as being substantially identical to another structure, if the degree of branching and substitution as well as the type of substituent of both structures are at least 90 % identical, particularly at least 95 % identical, particular at least 99 % identical.

The linkage between the single core entities is, e. g., established by reaction of a hydroxyl group of one of the core entities and an epoxide of a linker molecule according to the following scheme: 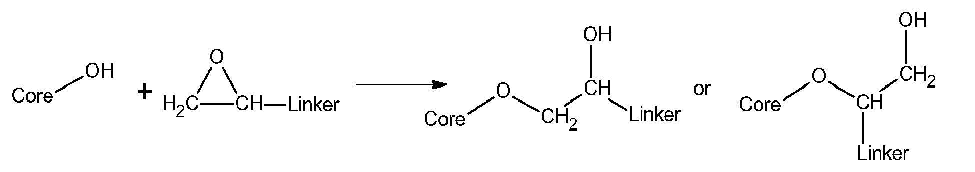 Thus, a ring opening polymerization takes place. For sake of clarity, only one epoxide group of the linker molecule is shown in the above scheme. It is easily understandable for a man skilled in the art that a single linker molecule bearing two epoxide groups will react with two core entities according to the above scheme so that according core-linker-core structures are present in the nanoparticle. Further, if the epoxide group is not part of a linker molecule, but of a core entity instead, the term "linker" has to simply be replaced by "core", not influencing the general reaction itself.

Crosslinking can also be done by a cycloaddition reaction (so-called Huisgen reaction) of an alkyne and an azide. In this case, the reaction will take place according to the following exemplary scheme: 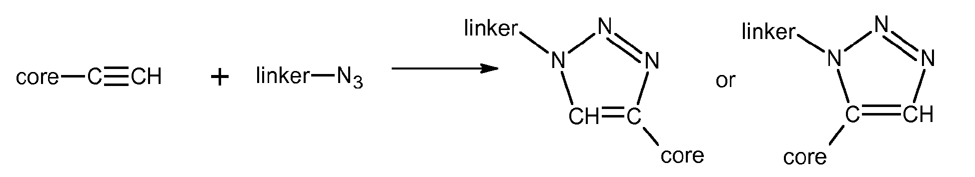 Thus, two circular linker moieties (one of each side of the middle part of the linker) are formed between two core entities. Again, for sake of clarity, only a single azide group is indicated for the linker molecule in the above scheme, although it generally carries two azide groups. Further, the explanations given above with respect to the reaction of two core entities are also valid here. In this case, only a single circular linker moiety would be present between two core entities.

In an alternative embodiment, the nanoparticles substantially comprise only the 1,4 regional isomer (left structure of the products of the cycloaddition reaction). This can be achieved by using a copper catalyst.

The core entity may comprise unreacted (free) hydroxyl groups as well as ether oxygens. The amount of ether oxygens is indicative for the degree of branching of the core entity. Thus, from the ratio of hydroxyl groups to ether oxygens, the degree of branching can be calculated. In an alternative embodiment, the average degree of branching of the core entities of the nanoparticle lies between approximately 40 and approximately 80 percent, particularly between approximately 50 and approximately 70 percent. An average branching of approximately 55 to approximately 65 percent is preferred.

If an epoxide-based polymerisation system is used, the nanoparticles comprise in an alternative embodiment preferably less than 1 ‰ (w/w), particularly less than 0.1 ‰ (w/w), based on the total weight of the nanoparticle, of non-reacted epoxide groups. Particularly all or substantially all epoxide groups have been reacted during crosslinking the single core entities.

The nanoparticles as described herein are very well suited to take up numerous different substances. For instance, at least one molecule of a substance of the group comprising coatings, creams, lubricants, material additives, biomarkers, pharmaceutically active substances, drugs, imaging agents, catalysts, scavenger reagents, amino acids, oligopeptides, polypeptides, proteins, dyes, pigments and light harvesting substances may be combined with a nanoparticle so as to form a nanoparticle system. Particularly, a plurality of according molecules to be carried can be carried by a nanoparticle.

In an embodiment, the at least one molecule to be carried is chemically bound to the nanoparticle and/or is physically attached to it. By chemically bonding (such as conjugating the molecule to be carried with the nanoparticle or ligating it onto the surface of the nanoparticle), generally a tighter bond may be formed as compared to physical attachment. However, by physical attachment (such as adsorption or incorporation) the molecule to be carried might be encapsulated in the nanoparticle so that the nanoparticle has to be opened or ruptured to release the molecule(s) to be carried. In the latter case, the structure of the nanoparticle significantly influences the release of the carried substance from the nanoparticle.

For example, the nanoparticle might comprise a disulfide-containing structure (cf. the structure of general formula (II) which can be used as residue R²). Thus, the release of a substance encapsulated in the nanoparticle can controlled in such a way that the substance is released when the nanoparticle is subjected to a reducing environment by means of which the disulfide bond is broken up. This environment can be provided by a certain compartment within a cell into which the substance encapsulated in the nanoparticle is to be delivered. Of course, such an environment can also be provided in an unlively system.

The nanoparticle system as defined before can thus preferably be used as a carrier system, particularly for providing coatings, creams, lubricants, material additives, biomarkers, pharmaceutically active substances, drugs, imaging agents, catalysts, scavenger reagents, amino acids, oligopeptides, polypeptides, proteins, dyes, pigments and/or light harvesting substances at or towards a usage site. Thus, the nanoparticles act as carriers for numerous substances.

In an alternative embodiment, the nanoparticles or the nanoparticle system are/is used for producing a drug delivery composition. The drugs to be used in this context are almost unlimited. However, if they exceed a certain size or molecular weight, physical restrictions with respect to an incorporation in the nanoparticles have to be regarded, as the man skilled in the art will easily understand. Drugs and imaging agents are particularly suited to be conjugated to a nanoparticle. The drug-loaded nanoparticles can accumulate in disease distressed tissues by the so-called enhanced permeation and retention effect.

The nanoparticles can also be used as an alternative to polyethylene glycol (PEG), particularly with respect to delivering coatings, creams, lubricants and material additives. They can also be used as dextran alternative, particularly as biomarker when conjugated to fluorescein isothiocyanate (FITC).

Further, the nanoparticles can be used as scaffolds, particularly when bearing catalysts, scavenger reagents, peptides or proteins. In an embodiment, peptides or proteins can be ligated onto surface of the nanoparticles to produce artificial globular proteins or enzymes.

It is also to be noted that dyes or pigments can be encapsulated or stabilised by the nanoparticles. In another embodiment, the nanoparticles can bear single or multiple chromophores to act as light harvesting particles.

The object of the invention is also achieved by a method for producing a nanoparticle as defined above, said method having the features of claim 10. Such a method (so-called miniemulsion method) comprises essentially three subsequent steps.

Firstly, a macroemulsion of core entities having structures according to general formula (I), or a macroemulsion of core entities according to general formula (I) and linker molecules according to general formulae (VI) or (VII) is prepared. With respect to those formulae, reference is made to the explanations given above. The possible meanings for the residues of the structures according to general formula (I), (VI) and (VII) and preferred embodiments therefore will not be repeated at this point for the sake of conciseness only, although they are also valid in the context of the claimed method. This is also true for other preferred embodiments of the nanoparticles explained above.

The macroemulsion is prepared by agitating the core entities or the core entities and the linker molecules in a non-solvent fluid comprising a surfactant. The term "macroemulsion" is to be understood as usual emulsion which can be obtained by shaking or stirring a solid in a fluid in which the solid is essentially unsolvable (non-solvent fluid). E. g., if core entities are used bearing a high degree of polar groups like terminal hydroxyl groups, which core entities are to be considered as overall hydrophilic, chloroform , cyclohexane or other comparable non-polar liquids may be used as non-solvent fluid. To give another example, if core entities carrying a high degree of terminal alkyne residues are used (such core entities are to be considered as overall hydrophobic), water, a mixture of water and another polar liquid such as dimethyl formamide, or a comparable polar liquid may be used as non-solvent fluid.

Said shaking, stirring or other form of agitating is particularly done in a rapid or vigorous way. In the macroemulsion, particles or droplets of above-nanometre range comprising core entities or core entities and linker molecules are finely dispersed in the fluid.

To achieve a better rate of dispersion or a better emulsion, a surfactant is added to the fluid, thus stabilizing the particles to be dispersed in the fluid. Suited surfactants are, e. g., poly(ethylene-co-butylene)-block-poly(ethylene oxide) (KLE), sodium dodecyl sulphate (SDS) and other surfactants known per se.

Additionally, ultralipophobes such as dimethyl sulphoxide may be alternatively added to the macroemulsion or macroemulsion to be formed in order to suppress Ostwald ripening droplet destabilisation which would be an unwanted reaction sideline on the way of preparing nanoparticles.

Secondly, a miniemulsion starting from macroemulsion formed in the preceding step is prepared by sonicating the macroemulsion. The term "miniemulsion" is to be understood in such a way that particles or droplets having a diameter of more than 10 nm (e. g. a diameter in the range of 20 to 200 nm) are finely dispersed in the non-solvent fluid. Thus, miniemulsions are special heterophase dispersions of relatively stable nanodroplets in a continuous non-solvent phase. The narrowly size distributed droplets in the range of, e. g., 20 to 200 nm result from high shearing the biphasic system in the presence of an appropriate surfactant. Each droplet behaves as a discrete nanoreactor and a whole range of polymerisation reactions can be initiated within, leading to size defined products. In a miniemulsion, the particles or droplets are not fully covered by surfactant. The dispersed phase can be hydrophobic, in so-called direct miniemulsion, where the continuous phase is typically aqueous. Conversely, a hydrophilic phase dispersed in hydrophobic medium is called an inverse miniemulsion.

Thirdly, the core entities are crosslinked (polymerized) by forming at least one bond between at least one of the core entities and at least another of the core entities or by forming at least one first bond between a linker molecule and at least one of the core entities as well as at least one second bond between the same linker molecule and another of the core entities. As a result, chemically (covalently) bound core entities, or core entities and linker molecule residues are formed, building up nanoparticles having a size in the range of approximately 20 to approximately 200 nm.

The crosslinking reaction itself can, e. g., take place as a cycloaddition reaction or a ring opening polymerisation (see above) as well as any other type of polymerisation.

In an alternative embodiment of the miniemulsion method, sonication to form a miniemulsion is done one to twenty times, particularly two to ten times, particularly three to five times (e. g. four times) for 1 second to 5 minutes, particularly for 20 seconds to 2 minutes, particularly for 30 seconds to 1.5 minutes in each case.

The object of the invention is also achieved by another method for producing a nanoparticle as defined above, said method having the features of claim 11. Such a method (so-called microemulsion method) also comprises essentially three subsequent steps.

Firstly, a polar phase of core entities having structures according to general formula (I) or a polar phase of core entities according to general formula (I) and linker molecules having a structure according to general formulae (VI) or (VII) is formed by mixing the core entities or the core entities and the linker molecules and adding a highly polar solvent to this mixture. The ratio of one type of core entity to another type of core entity or of core entities to linker molecules (in particular the ratio of glycerol to an epoxide compound like glycidyl glycerolether) is between 3:1 and 1:3, e. g. 1:1. Examples of highly polar solvents are dimethyl sulphoxide, dimethyl formamide and formamide.

With respect to the formulae (I), (VI) and (VII), reference is again made to the explanations given above. The possible meanings for the residues of the structures according to general formula (I), (VI) and (VII) and preferred embodiments therefore will not be repeated at this point for the sake of conciseness only, although they are also valid in the context of the claimed method. This is also true for other preferred embodiments of the nanoparticles explained above.

Secondly, a microemulsion is formed by dispersing the polar phase in a high-boiling low-viscous oil with the aid of a surfactant.

Isooctane is an example of a suited high-boiling low-viscous oil. Aerosol OT (sodium bis(2-ethylhexyl) sulfosuccinate) is an example of a suited surfactant. However, almost any surfactant or a blend of surfactants with a similar hydrophobic-to-lipophobic balance can be used. To give another example, CH₃-(CH₂)ₘ-O-(CH₂-CH₂-O)ₙ-H with m being 1 to 15, particularly 5, and n being 1 to 10, particularly 5, can be used as surfactant.

In an alternative embodiment, the molar ratio of core entities (particularly glycerols) or core entities and linker molecules to surfactant is between 2:1 and 4:1, particularly around 4:1.

In another alternative embodiment, the microemulsion is formed at a temperature between room temperature and around 115 °C, particularly at 115 °C.

Thirdly, the core entities are crosslinked by forming at least one bond between at least one of the core entities and at least another of the core entities or by forming at least one first bond between a linker molecule and at least one of the core entities as well as at least one second bond between the linker molecule and another of the core entities. By crosslinking, spherical polyglycerol nanogels or spongelike mesoporous polyglycerol materials are obtained.

In an alternative embodiment, crosslinking is done in a sealed tube under stirring at 115 °C during 16 hours.

Microemulsions differ from miniemulsions primarily due to the use of excess surfactant, with the result that microemulsions do not require input of external energy to form nanoscale emulsions (e.g. high shear sonication). Consequently, heterophases are formed spontaneously with thermal energy and are indefinitely stable under the conditions employed for formation. Generally, microemulsions can be prepared as nanodroplets with sizes analogous to miniemulsion, or as a bicontinuous phase with a sponge like structure.
In an alternative embodiment of either method, crosslinking takes place by reaction of an alkyne-terminated core entity with an azide-terminated core entity or of an alkyne-terminated core entity with an azide-terminated linker molecule or of an alkyne-terminated linker molecule with an azide-terminated core entity.

In another embodiment of either method, crosslinking takes place by reaction of an epoxide-terminated core entity with a hydroxyl-terminated core entity or of an epoxide-terminated core entity with a hydroxyl-terminated linker molecule or of an epoxide-terminated linker molecule with a hydroxyl-terminated core entity.

When a polymerisation between hydroxyl groups and epoxides takes place, the ratio of hydroxyl groups to epoxide groups is preferably approximately 6:5 to approximately 5:1, particularly approximately 4:3 to approximately 5:3, particularly around approximately 3:2.

In an alternative embodiment of either method, the size distribution of the formed nanoparticles, particularly a curve by which a size distribution histogram is fitted or a size distribution curve obtained by (dynamic) light scattering, shows a full width at half maximum (FWHM) of less than 25 nm, particularly less than 20 nm, particularly less than 15 nm, particularly less than 10, particularly less than 5 nm. These FWHM indicate a narrow size distribution.

In another embodiment of either method, crosslinking is performed in presence of at least one catalyst chosen from the group comprising acids, metals and metal salts. E. g. alkali metals, alkaline earth metals or transition metals as well as their salts can be used as catalysts. Particularly suited catalysts are, e. g., para-toluenesulfonic acid, copper sulphate, copper ascorbate, ruthenium, and mixtures thereof. Other particularly suited catalysts are Lewis acid catalysts like BF₃ or Ti(OR)₄ with R being an alkyl residue.

Crosslinking might be performed at elevated temperature (such as approximately 40 °C to approximately 140 °C, particularly approximately 60 °C to approximately 120 °C, for instance at around 60 °C, at around 80 °C or at around 115 °C) in a sealed or open system over a period of 1 minute to 100 hours, particularly 1 hour to 20 hours, particularly 5 hours to 20 hours or around 16 hours. It also possible to work with a temperature gradient, i. e., to start with an elevated temperature and then perform further crosslinking at room temperature (and also vice versa) as well as use different elevated temperatures and optionally also room temperature for a certain time in each case.

Optionally, the nanoparticles can be purified after synthesis, e. g. by solid/liquid extraction, and can be obtained after purification quantitatively free from surfactant. It is also possible to subsequently redissolve or redisperse the nanoparticles. E. g., polar nanoparticles can be purified by solid/liquid extraction with hexane, acetone or diethyl ether and can be redissolved freely in polar solvents like methanol, ethanol, dimethyl formamide, dimethyl sulphoxide and water.

The invention will be further explained in more detail by the following Figures in conjunction with according non-limiting examples.

### In the Figures:

- Fig. 1: shows a first reaction scheme of the synthesis of crosslinked polyglycerol based nanoparticles,
- Fig. 2A: shows size distributions of nanoparticles obtained by a reaction according to the scheme Figure 1,
- Fig. 2B: shows a transmission electron microscopy image of nanoparticles obtained by a reaction according to the scheme of Figure 1,
- Fig. 3: shows a second reaction scheme of the synthesis of crosslinked polyglycerol based nanoparticles,
- Fig. 4A: shows a transmission electron microscopy image of nanoparticles obtained by a reaction according to the scheme of Figure 3,
- Fig. 4B: shows size distributions of nanoparticles obtained by a reaction according to the scheme of Figure 3,
- Fig. 5: shows a third reaction scheme of the synthesis of crosslinked polyglycerol based nanoparticles,

- Fig. 6A: shows a transmission electron microscopy image of nanoparticles obtained by a reaction according to the scheme of Figure 5,
- Fig. 6B: shows size distributions of nanoparticles obtained by a reaction according to the scheme of Figure 5,
- Fig. 7A: shows the absorption of free fluorescein at different concentrations,
- Fig. 7B: shows the absorption of encapsulated fluorescein within nanoparticles,
- Fig. 7C: shows the fluorescence of free fluorescein at different concentrations following an excitation at 460 nm,
- Fig. 7D: shows the fluorescence of encapsulated fluorescein within nanoparticles following an excitation at 460 nm and
- Fig. 7E: shows a plot of fluorescence versus absorption/concentration for free fluorescein (FL) and for encapsulated fluorescein within nanoparticles (as137), wherein excitation took place at 460 nm and emission was measured at 520 nm.

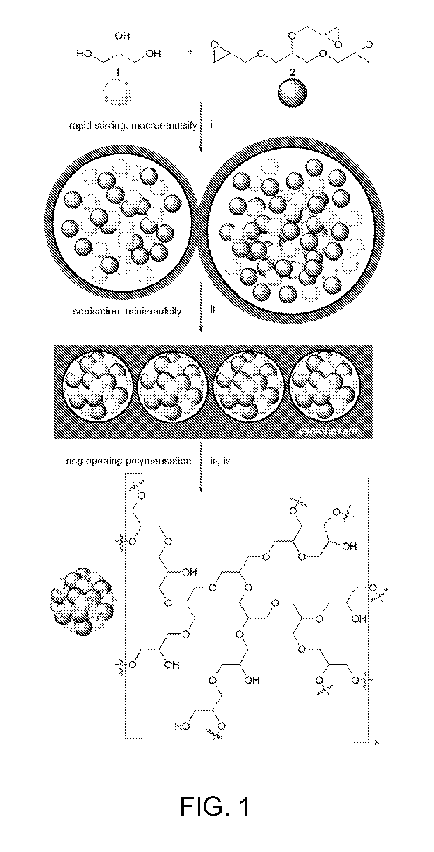

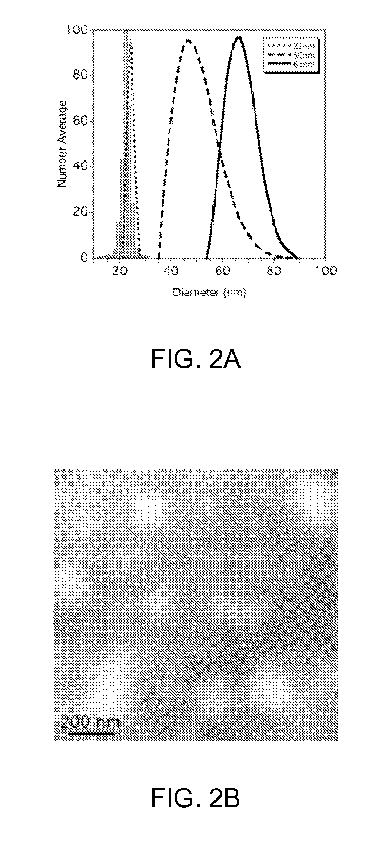

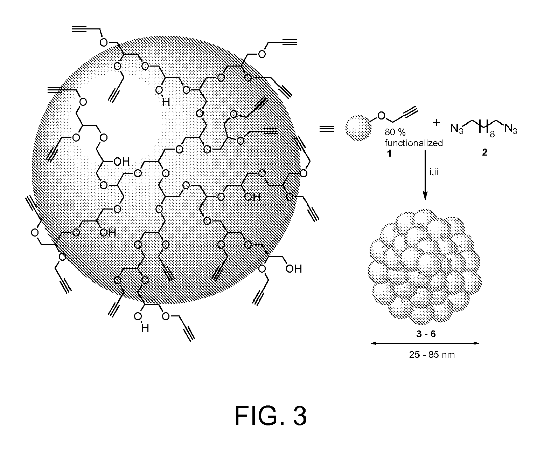

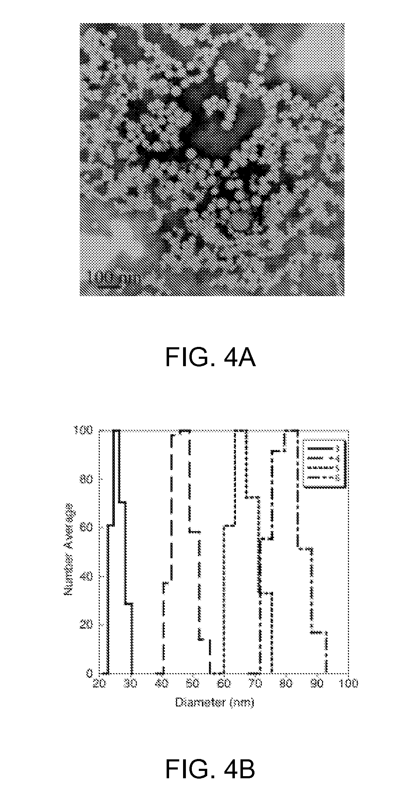

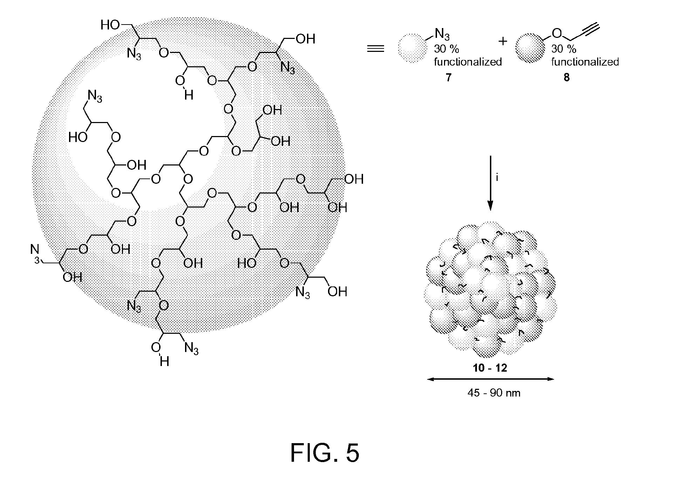

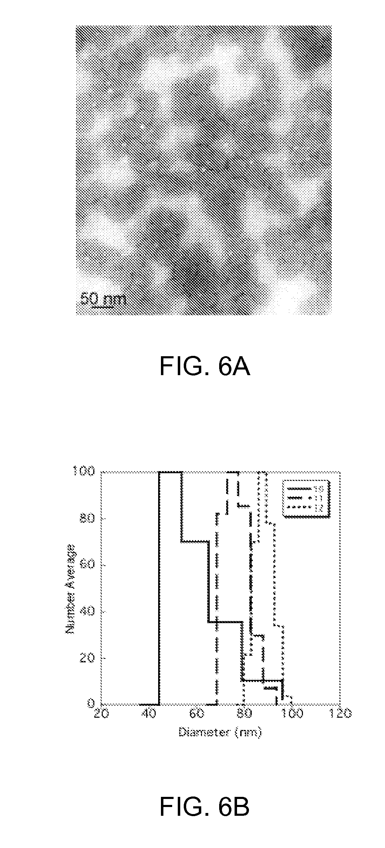

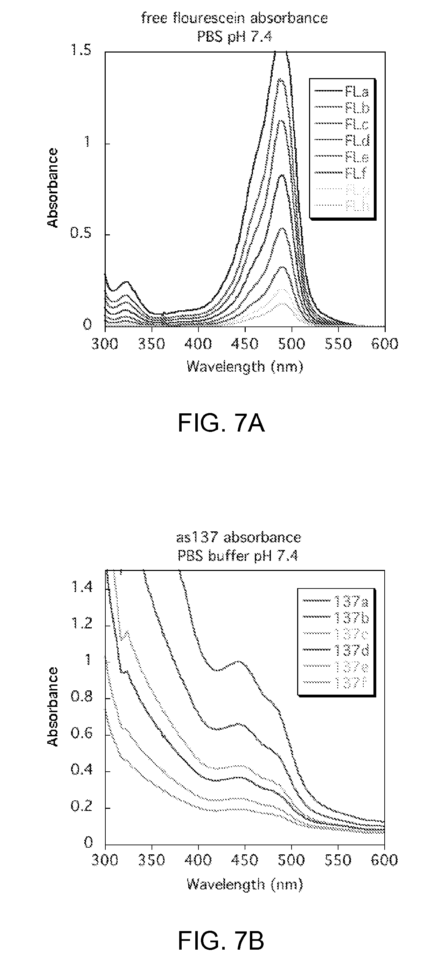

Figures 1, 2A and 2B will be explained in conjunction with example 1. Figures 3, 4A and 4B will be explained in conjunction with example 2. Figures 5, 6A and 6B will be explained in conjunction with example 3. Figures 7A to 7E will be explained in conjunction with example 6.

### Example 1: Synthesis of crosslinked Polyglycerol-based nanoparticles in inverse miniemulsion via a hydroxyl epoxide polymerisation

Figure 1 shows a general reaction scheme of the reaction of glycerol 1 (represented by white spheres) and glycidyl glycerolether 2 (represented by grey spheres) which is a cheap commercially available trisepoxide. In step i), glycerol as core entity and glycidyl glycerolether as linker molecule are stirred for 1 hour in DMSO, cyclohexane as non-solvent fluid, and KLE as surfactant at room temperature. A macroemulsion is formed. In step ii), this macroemulsion is sonicated four times for 1 minute each time. A miniemulsion is formed. In step iii), para-toluenesulfonic acid (in catalytic amounts like 5 mg) is added and the miniemulsion is heated to 115 °C in a sealed tube over a period of 16 hours. Thus, crosslinking between glycerol and glycidyl glycerolether takes place. In step iv), the liquid phase is evaporated and the nanoparticles are purified by solid/liquid extraction.

The reaction system of example 1 is based upon a so-called inverse miniemulsion wherein the polar reactants are dispersed in non-polar cyclohexane. A poly(ethylene-co-butylene)-block-poly(ethylene oxide) surfactant, acting as an excellent stabiliser of glycerol/trisepoxide nanodroplets, particularly if a small amount of dimethyl sulphoxide is mixed in as an ultralipohobe, is added to the liquid phase. Miniemulsions were formed by ultrasonication with a sonic tip prior to addition of para-toluenesulfonic acid catalyst.

In bulk single phase reaction, glycerol/trisepoxide mixtures rapidly form insoluble macrogels after addition of acid catalyst. However, polyadditions in miniemulsion as applied here proceeded to give nanogels of defined size as the continuous non-solvent prevents macroscopic aggregation. Nanoparticles were obtained quantitatively, free from surfactant after purification by solid/liquid extraction with hexane, and can be redissolved freely in polar solvents including water.

The synthesized nanoparticles were analysed by dynamic light scattering and transmission electron microscopy of aqueous solutions. Results are summarised in Table 1.

**Table 1: Influence of conditions on particle size. Continuous phase: cyclohexane 15 ml, heat 115 °C in sealed tubes, reaction time 16 h.**

| Product | Monomer ratio*^{a}* | Monomer (mg)*^{b}* | Surfactant (mg) | Mean Size*^{c}* |
|---|---|---|---|---|
| **3** | 1:1 | 485*^{d}* | 20 | 40 nm |
| **4** | 3:2 | 270*^{e}* | 30 | 25 nm |
| **5** | 3:2 | 270*^{e}* | 20 | 25 nm |
| **6** | 3:2 | 270*^{e}* | 10 | 25 nm |
| **7** | 3:2 | 1080*^{f}* | 20 | 50 nm |
| **8** | 3:2 | 2160*^{g}* | 20 | 65 nm |
| **9** | 3:2 | 135*^{e}* | 20 | 25 nm |
| **10** | 3:1 | 2160*^{g}* | 20 | 75 nm |

| | | | | |
|---|---|---|---|---|
| *^{a}* reported as glycerol alcohols:epoxide; *^{b}* sum of monomers with aforementioned ratio; *^{c}* Particle sizes measured by DLS in water, polydispersities in all cases < 1.3; *^{d}* 0.1 ml DMSO added; *^{e}* 0.05 ml DMSO added; *^{f}* 0.2 ml DMSO added; *^{g}* 0.4 ml DMSO added | | | | |

As standard, droplets were mixed with a 3:2 ratio of alcohol:epoxide groups; however crosslinked polyglycerol nanoparticles of comparble size and quality were also obtained starting with either a 1:1 or a 3:1 alcohol:epoxide ratio. Reactions were heated at 115 °C for 16 hours; however crosslinked polyglycerol nanoparticles of comparable quality also result from heating at 60 °C.

Very narrow polydispersities were obtained as can be seen in Figures 2A and 2B. Figure 2A shows in curved lines size distributions measured by dynamic light scattering (DLS) of obtained nanoparticles **4, 7** and **8** (from left to right; cf. also Table 1). The histogram in the left side of Figure 2A corresponds to the size distribution of particles **4** after counting 500 particles from the transmission electron microscopy (TEM) image of Figure 2B. For preparing the TEM image, particles **4** were negatively stained with phosphotungstic acid.

The polymerisation is rapid enough that inert particles with substantially all reactive epoxy groups exhausted are formed faster than the inevitable Ostwald ripening can take place, which would give rise to aggregated products.

Average particle diameters could be obtained between 25 nm and 65 nm by adjusting the quantity of monomers prior to emulsification whilst maintaining the concentration of surfactant. There appears to be a lower limit to particle size at 25 nm as attempts to produce smaller particles by either altering surfactant quantity (**4** to **6**) or lowering the amount of monomers (**9**) gave the same result. ¹H and ¹³C NMR spectra are consistent with known lower molecular weight crosslinked polyglycerol nanoparticles with a calculated degree of branching of approximately 60 % (i.e. 60 % ether oxygens, 40 % unreacted alcohol oxygens). The presence of unreacted epoxides or surfactant was not detected by NMR spectroscopy.

Example 1 as an embodiment of the claimed method shows a very simple route to access comparatively large crosslinked polyglycerol nanoparticles from cheap, abundant starting materials. The size of these nanoparticles and the high biocompatibility of crosslinked polyglycerol nanoparticles enable one to use these nanoparticles as drug delivery vehicles. E. g., drugs and/or dyes can be attached to these nanoparticles either chemically (e. g., by surface grafting as with polyhdroxylated nanoparticles) or physically by incorporating species within miniemulsion nanodroplets prior to polymerisation. These attachment possibilities have a high degree of generality as many substrates can generally be miniemulsified and polymerised following the same procedure.

### Example 2: Synthesis of crosslinked polyglycerol-based nanoparticles in direct miniemulsion via a Huisgen click coupling

Figure 3 shows the route to synthesize hydrophobic particles. Before the synthesis was started, HPG having a molecular weight of 5,000 and being 60 % branched was functionalized on 80 % of its free hydroxyl groups with propargyl bromide. The subsequent polypropargyl ether (1), depicted as light grey sphere with only one of its numerous terminal alkyne residues shown for the sake of clarity, as a core entity and decanediazide (2) as a linker molecule (3:1 alkyne/azide ratio) were dissolved in chloroform and miniemulsified in water with sodium dodecyl sulphate (SDS) as surfactant (step i)).

Subsequently (step ii)), a catalytic amount of CuSO₄ · 5 H₂O and sodium ascorbate was added to the aqueous phase and the system was heated to 60 °C for 3 hours to remove chloroform and initiate crosslinking polymerization in bulk nanodeposits. After reaction for further 16 hours at room temperature, spherical particles were obtained as a colloidal suspension in water stabilised by the remaining surfactant. As evidenced by DLS and TEM measurements, the nanoparticles can be precipitated by acetone addition and fully resuspended in dilute SDS solution. These suspensions were stable for several months.

As shown in Table 2, the size of particles obtained could be tuned in a rational manner by varying the ratio of surfactant to dispersed phase volume. The diameter size range could be varied between 25 nm and 85 nm with low polydispersity satisfactory for virtually any further applications. Recovery yields varied from quantitative for the small particle cases to somewhat lower (65 %) when preparing larger particles. Lost material precipitated from the aqueous suspension particularly due to droplet coalescence and the formation of larger aggregates.

**Table 2: Reaction conditions for the formation of hydrophobic nanoparticles in direct miniemulsion. Constant parameters: H₂O continuous phase = 15 ml. Surfactant (SDS) = 30 mg.**

| Product | Monomers (mg) [a] | CHCl₃ (ml) Dispersed Phase | Ave. Diameter (nm) [b] | Recovery (%) |
|---|---|---|---|---|
| **3** | 50 | 1 | 25 | >95 |
| **4** | 100 | 2 | 45 | 90 |
| **5** | 150 | 3 | 65 | 75 |
| **6** | 250 | 5 | 85 | 65 |

| | | | | |
|---|---|---|---|---|
| [a] sum of 4:1 *w*/*w* ratio of HPG:diazide (**1:2**) [b] number average determined by DLS | | | | |

The size distributions for nanoparticles 3 to 6 was observed by TEM imaging and DLS. A representative TEM image of nanoparticles 3 is depicted in Figure 4A. Figure 4B shows size distributions of nanoparticles 3 to 6 (from left to right).

The general procedure for the preparation of particles **3** to **6** (cf. Table 2) will be explained in more detail below by way of example with respect to particle **3**.

A solution of SDS (30 mg, 0.104 mmol, 7 mM (i. e. mmol/l)) in water (15 ml) was vigorously stirred in a cylindrical 30-ml vial for 30 min. A solution of polypropargylether (**1**) (40 mg, 0.266 mmol alkyne equivalents) and decanediazide (**2**) (10 mg, 0.045 mmol, 0.9 mmol azide equivalents) in CHCl₃ (1 ml) was added to the aqueous phase and the whole was stirred vigorously for 1 h. After this time, a milky macroemulsion is formed which would otherwise separate upon prolonged standing. The formed macroemulsion was ultrasonicated with a sonic tip apparatus 4 × 1 minute under ice cooling to form a milky miniemulsion (the resultant miniemulsion is stable for periods of several weeks). Catalytic amounts of CuSO₄ · 5H₂O (10 mg) and sodium ascorbate (12 mg) were added to the stirring miniemulsion and, after heating in the open vial at 60 °C for 3 hours, CHCl₃ evaporated to leave a transparent colloidal suspension of polymer. The system was stirred for a further 16 hours at room temperature to ensure completeness of cycloaddition crosslinking reactions. The product was diluted with 1 mM SDS solution and analyzed by DLS and TEM and was stable for months.

### Example 3: Synthesis of crosslinked Polyglycerol-based nanoparticles in inverse miniemulsion via a Huisgen click coupling

Hydrophilic crosslinked polyglycerol nanoparticles were prepared by a slightly modified procedure as compared to example 2. This modified scheme is depicted in Figure 5. Complementary HPG macromonomers having a molecular weight of 5,000 and being 60 % branched with in one case 30 % (relative to free OH groups) azido (7) and in the other case 30 % propargyl (8) functionality were mixed in 1:1 ratio in DMF and miniemulsified in cyclohexane with the aid of a poly(ethylene-co-butylene)-block-poly(ethylene oxide) surfactant (KLE). Thus, two different core entities (one bearing terminal alkyne residues, the other bearing terminal azide residues) are used in this example.

Cu(II)/sodium ascorbate was ineffective as catalyst in this heterogeneous system, however efficient copper free 'click' coupling occurred using thermal initiation in miniemulsion conditions. After heating to 80 °C for 16 h in a sealed tube, stable nanoparticles are formed which are precipitated by acetone addition, washed several times (solid/liquid extraction) with hexane to remove surfactant, and can be redissolved fully in water and other polar solvents.

As shown in Table 3, the diameter of nanoparticles obtained could be varied between 45 nm and 90 nm by changing the amount of surfactant used. The products have very narrow polydispersity, due to the conditions employed, particularly the choice of surfactant, giving a highly homogeneous emulsion. Again the amount of recovered material lowers as one forms larger aggregates but this could conceivably be remedied by choice of conditions, the reported conditions being optimized towards 50 nm diameter particles.

**Table 3: Reaction conditions for the formation of hydrophilic nanoparticles in inverse miniemulsion. Constant parameters: Cyclohexane = 15 ml. DMF dispersed phase = 1 ml.**

| Product | Monomers (mg)[a] | Amount of surfactant (mg) | Ave. Diameter (nm)[b] | Recovery (%) |
|---|---|---|---|---|
| **10** | 70 | 30 | 45 | >95 |
| **11** | 70 | 20 | 75 | 75 |
| **12** | 70 | 10 | 90 | 50 |

| | | | | |
|---|---|---|---|---|
| [a] sum of 1:1 *w*/*w* ratio of HPGpolyazide:HPGpolypropargyl (**7:8**) [b] number average determined by DLS. | | | | |

The size distributions for nanoparticles 10 to 12 was observed by TEM imaging and DLS. A representative TEM image of nanoparticles 10 is depicted in Figure 6A. Figure 6B shows size distributions of nanoparticles 10 to 12 (from left to right).

The general procedure for the preparation of particles **10** to **12** (cf. Table 3) will be explained in more detail below by way of example with respect to particle **10**.

A solution of KLE surfactant (30 mg, 0.004 mmol) in cyclohexane (15 ml) was vigorously stirred in a cylindrical 30-ml vial for 30 min. A solution of polyazide (**7**) (35 mg, 0.301 mmol azide equivalents) and polypropargylether (**8**) (35 mg, 0.340 mmol alkyne equivalents) in DMF (1 ml) was added to the cyclohexane phase and the whole was stirred vigorously for 1 hour. After this time a slightly turbid macroemulsion is formed which would otherwise rapidly separate. The formed macroemulsion was ultrasonicated with a sonic tip apparatus 4 × 1 minute under ice cooling to form a fully transparent miniemulsion (the resultant miniemulsion is stable for several hours). The miniemulsion was transferred to a resealable tube and heated with stirring at 80 °C for 16 h. After cooling to room temperature, the solid product nanoparticles were precipitated by addition of acetone (ca. 30 ml) and purified from surfactant by repeated (×3) solid/liquid extraction with n-hexane. The solid product was dissolved in MeOH or water and analysed by DLS and TEM.

### Example 4: Synthesis of crosslinked Polyglycerol-based nanoparticles in inverse miniemulsion via a Huisgen click coupling, under addition of a dye

Example 4 was performed as example 3 with the sole difference that a small amount of propargyl functionalized hemicyanine dye having the following structure (VIII) 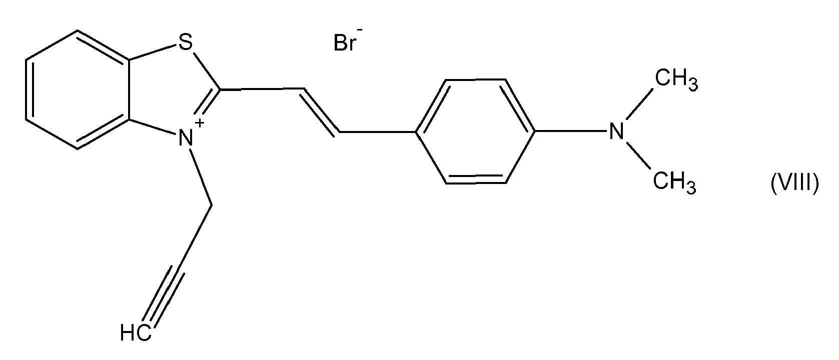 was added to the reaction system before preparing a macroemulsion. E. g., 1 mg (0.003 mmol) of hemicyanine dye (VIII) was mixed with polyazide (7) and polypropargylether (8) when preparing a dye-loaded nanoparticle 10. Adding said dye was found to have no discernible effect on the product structure. The results obtained with dye-loaded nanoparticles 10 to 12 with respect to size, size distribution and stability are identical to that of nanoparticles 10 to 12 without dye (cf. example 3).

In all cases the added dye was fully incorporated into the hence coloured nanoparticles as washings during purification contained no trace of the strong red colour of the dye (VIII).

### Example 5: Synthesis of crosslinked Polyglycerol-based nanoparticles in inverse microemulsion via a hydroxyl epoxide polymerisation

Crosslinked polyglycerol-based nanoparticles or polyglycerol nanogels cannot only be prepared in miniemulsion, but also in microemulsion. Microemulsion glycerol nanodroplets stabilised in inverse microemulsion have already been studied previously (Z. Saidi, C. Mathew, J. Peyrelasse and C. Boned, Physical Review A, 1990, 42, 872-876). By applying this methodology to polymerisation reactions of the type described in Example 1, it is possible to produce polyglycerol nanogels within the same size range and of the same structure as those outlined in Example 1.

Reactions are conducted in an essentially water-free medium. I. e., water is excluded as much as possible according to standard laboratory procedures. To constitute a polar phase, glycerol 1 and glycidyl glycerolether 2 (cf. Figure 1) are mixed in a 1:1 ratio of glycerol: glycidyl glycerolether up to a total weight of 2 grams, to which 0.2 ml of dimethysulfoxide is added.

This polar phase is dispersed in 20 ml of isooctane with the aid of commercial surfactant Aerosol OT (sodium bis(2-ethylhexyl) sulfosuccinate) having the following structure (IX)

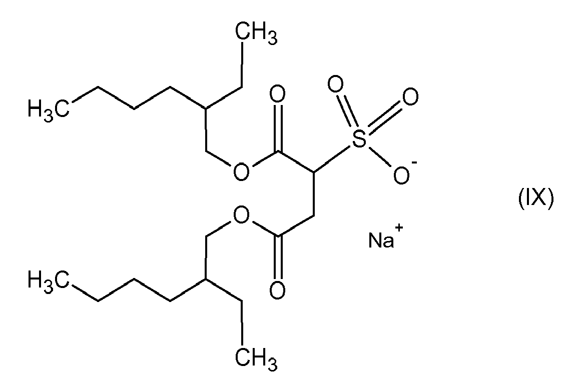

with a mol:mol ratio of glycerols:surfactant of 4 at 115 °C to form an optically transparent microemulsion which is composed of discrete surfactant stabilised polar droplets with the size ranges analogous to those prepared by the miniemulsion technique described in Example 1.

To this microemulsion is added para-toluenesulfonic acid before stirring in a sealed tube at preferably 115 °C for 16 hours. After this period polymerisation within the discrete polar droplets yields the polyglycerol nanogels which are separated from surfactant by dilution with n-hexane and centrifugation as with the purification protocols used in Example 1.

### Example 6: Synthesis of dye loaded crosslinked polyglycerol-based nanoparticles in inverse miniemulsion via a hydroxyl epoxide polymerisation

In order to ascertain whether dyes can be physically incorporated within the nanoparticle matrix fluorescein encapsulation studies were carried out as per the following procedure. Glycerol 1 (250 mg, 2.72 mmol), glycidyl gylcerolether 2 (720 mg, 2.72 mmol), fluorescein (20 mg, 0.06 mmol) and DMSO (0.1 ml) as the polar phase were emulsified in cyclohexane with KLE surfactant (20 mg) and polymerised and purified following the procedure outlined in Example 1.

The yellow oil product was dialysed in pure water over a 2 day/6 solvent change period (benzoylated cellulose membrane, molecular weight cut off 1,000 daltons) to remove unencapsulated fluorescein. Visibly, after the first solvent change all unencapsulated dye is already leached from the dialysis tube. UV-vis absorption and fluorescence spectra in PBS buffer (pH 7.4) show that the purified product yellow oil (referred to as "as137") retains fluorescein.

Figure 7A shows the absorption of free fluorescein (FL) at different concentrations, wherein the curves represent from top to bottom - with respect to the highest absorption peak - samples FLa, FLb, FLc, FLd, FLe, FLf, FLg and FLh. Sample FLa has the highest fluorescein concentration and sample FLh has the lowest fluorescein concentration.

Figure 7B shows the absorption of encapsulated fluorescein within nanoparticles (as137)), and - in conjunction with Figure 7A- that between different environments the fluorescence profile of fluorescein is dramatically altered. The curves represent from top to bottom at 450 nm samples 137a, 137b, 137c, 137d, 137e and 137f.

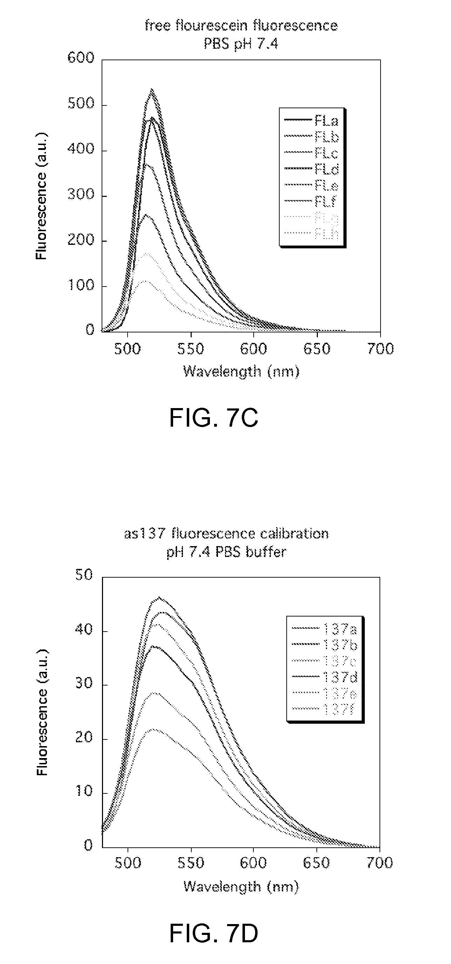

Figure 7C shows the fluorescence of free fluorescein at different concentrations, wherein excitation was performed at 460 nm. The curves represent from top to bottom at the highest fluorescence peak samples FLb, FLc, FLa, FLd, FLe, FLf, FLg and FLh. The fact that sample FLa having the highest concentration of fluorescein does not also show the highest fluorescence observed is due to fluorescein self-quenching.

Figure 7D shows the fluorescence of encapsulated fluorescein within nanoparticles (as137), wherein excitation was performed at 460 nm. The curves represent from top to bottom at the highest fluorescence peak samples 137b, 137a, 137c, 137d, 137e and 137f. Again, sample 137a having the highest fluorescein concentration does not show the highest fluorescence due to fluorescein self-quenching.

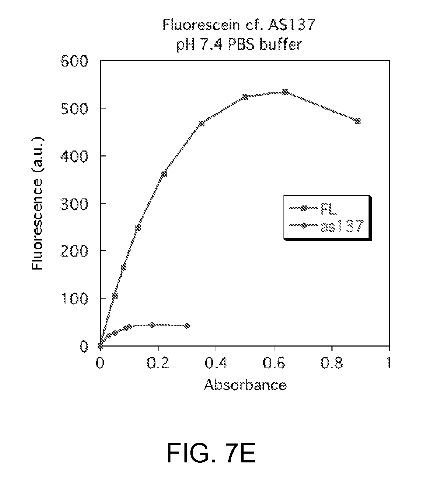

Figure 7E shows a plot of fluorescence versus absorption/concentration for free fluorescein (FL; represented in squares) and for encapsulated fluorescein within nanoparticles (as137, represented by dots). Excitation was performed at 460 nm and emission was measured at 520 nm.

Absorbencies of fluorescein within nanoparticles (as137) were estimated by reading absorbance at 460 nm and subtracting the absorbance value estimated by extrapolation to correspond to the non-linear, particle light-scattering perturbed baseline.

It is evident that the fluorescence of fluorescein when encapsulated within polyglycerol nanoparticles is very strongly quenched, presumably as a result of well known fluorescein self-quenching or to a lesser degree due to microenvironment (e. g. polarity, sterics, pH) factors. Dye release from formed nanoparticles was not observed even after further prolonged dialysis in various polar solvents (pure water, PBS buffer, methanol, ethanol) leading to the conclusion that the dye is, in this embodiment, practically irreversibly encapsulated either by multiple supramolecular (e.g. hydrogen bonding) interactions or by steric restriction (clathration).

## Claims

1. Nanoparticle, comprising a plurality of core entities having a structure according to general formula (I) 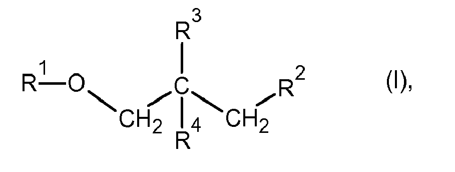 wherein, independently from one core entity to another,
**R**¹ denotes H or **R**¹⁰⁰,
**R**² denotes -OH, -O-**R**²⁰⁰ or a structure of general formula (II) 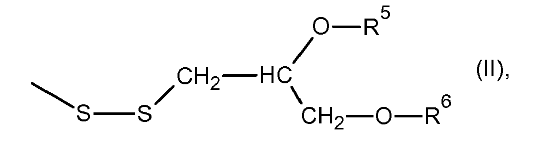
**R**³ denotes -O-**R**³⁰⁰ or -CH₂-O-**R**³⁰⁰,
**R**⁴ denotes H, -CH₂-O-R⁴⁰⁰ or -CH₂-CH₃,
**R**⁵ denotes H or **R**⁵⁰⁰,
**R**⁶ denotes H or **R**⁶⁰⁰,
**R**¹⁰⁰, **R**²⁰⁰, **R**³⁰⁰, **R**⁴⁰⁰, **R**⁵⁰⁰, **R**⁶⁰⁰ denote independently from each other structures of the general formulae (III) to (V) 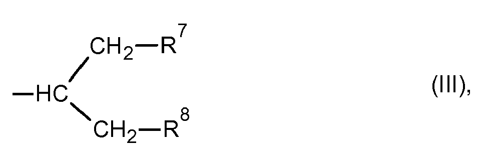 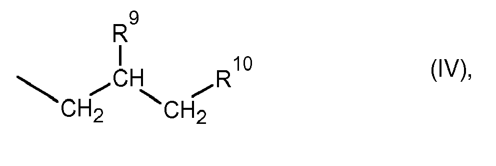 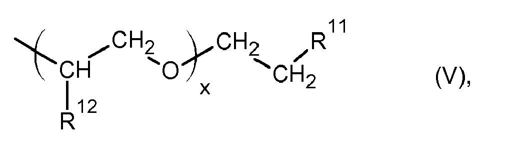
**R**⁷ denotes -OH, -O-**R**⁷⁰⁰, -O-**R**⁷⁰¹, -O-CH₂-C≡CH, _{-N3},
**R**⁸ denotes -OH, -O-**R**⁸⁰⁰, -O-**R**⁸⁰¹, -O-CH₂-C≡CH, _{-N3,}
**R**⁹ denotes -OH, -O-**R**⁹⁰⁰, -O-R⁹⁰¹, -O-CH₂-C≡CH, _{-N3},
**R**¹⁰ denotes -OH, -O-R¹⁰⁰⁰, -O-R¹⁰⁰¹, -O-CH₂-C≡CH, _{-N3},
R" denotes -OH, -O-**R**¹¹⁰⁰, -O-R¹¹⁰¹, -O-CH₂-C≡CH, _{-N3},
**R**¹² denotes H or -CH₃,
x is 0 to 100, particularly 1 to 10,
**R**⁷⁰⁰, **R**⁸⁰⁰, **R**⁹⁰⁰, **R**¹⁰⁰⁰, **R**¹¹⁰⁰ denote independently from each other 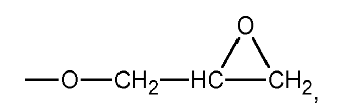
wherein **R**⁷⁰¹, **R**⁸⁰¹, **R**⁹⁰¹, **R**¹⁰⁰¹, **R**¹¹⁰¹ denote independently from each other at least one residue of the same generic structure as **R**¹⁰⁰, **R**²⁰⁰, **R**³⁰⁰, **R**⁴⁰⁰, **R**⁵⁰⁰ or **R**⁶⁰⁰, wherein the meanings of **R**⁷ to **R**¹² may be, within the scope of the afore-mentioned generic meanings, for every single residue identical or different to that of **R**¹⁰⁰, **R**²⁰⁰, **R**³⁰⁰, **R**⁴⁰⁰, **R**⁵⁰⁰ or **R**⁶⁰⁰,
wherein each core entity is covalently bound to at least one other core entity via a linker entity, wherein the linker entity is formed
● by reaction of two core entities according to general formula (I), particularly by reaction of an alkyne-terminated core entity with an azide-terminated core entity or of an epoxide-terminated core entity with a hydroxyl-terminated core entity, or
● by reaction of a core entity with a linker molecule, the linker molecule having a structure according to general formulae (VI) or (VII) 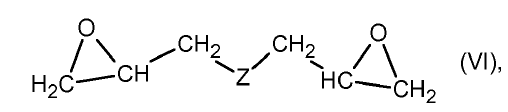 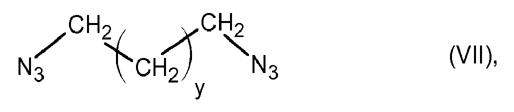
wherein Z denotes -O-, -S-S-, 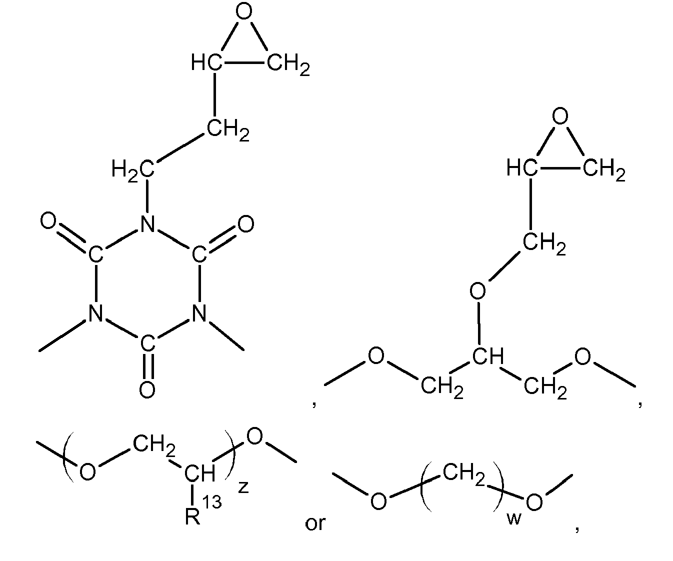 **R**¹³ denotes H or CH₃ and
w, y and z are independently from each other 0 to 100, particularly 1 to 10,
wherein the nanoparticle has a mean diameter of more than 10 nm.

2. Nanoparticle according to claim 1, **characterized in that** the mean diameter lies between 20 and 100 nm, particularly between 25 and 90 nm.

3. Nanoparticle according to claims 1 or 2, **characterized in that** the core entities have a substantially identical structure.

4. Nanoparticle according to any of the preceding claims, **characterized in that** the linked core entities have an average degree of branching of 40 to 80 percent, particularly 50 to 70 percent.

5. Nanoparticle according to any of the preceding claims, **characterized in that** it comprises less than 1 ‰ (w/w), based on the total weight of the nanoparticle, of non-reacted epoxide groups.

6. Nanoparticle system, comprising a nanoparticle according to any of the preceding claims, wherein the nanoparticle bears at least one molecule of a substance of the group comprising coatings, creams, lubricants, material additives, biomarkers, pharmaceutically active substances, drugs, imaging agents, catalysts, scavenger reagents, amino acids, oligopeptides, polypeptides, proteins, dyes, pigments and light harvesting substances.

7. Nanoparticle system according to claim 6, **characterized in that** said at least one molecule is chemically bound to the nanoparticle and/or is physically attached to it.

8. Use of a nanoparticle system according to claim 6 or 7 as a carrier system for providing coatings, creams, lubricants, material additives, biomarkers, pharmaceutically active substances, drugs, imaging agents, catalysts, scavenger reagents, amino acids, oligopeptides, polypeptides, proteins, dyes, pigments and/or light harvesting substances at a usage site.

9. Use of a nanoparticle system according to claim 6 or 7 for producing a drug delivery composition.

10. Method for producing a nanoparticle according to any of claims 1 to 5, **characterized by** the following steps
a) preparing a macroemulsion of core entities having structures according to general formula (I) 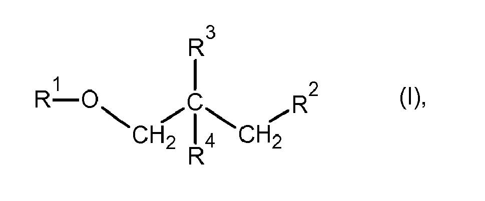 wherein, independently from one core entity to another,
**R**¹ denotes H or **R**¹⁰⁰,
**R**² denotes -OH, -O-**R**²⁰⁰ or a structure of general formula (II) 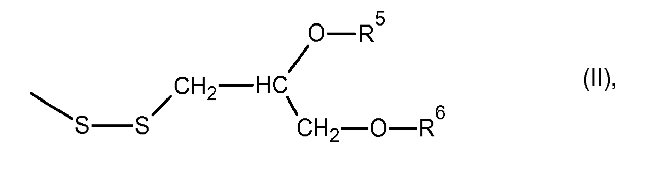 **R**³ denotes -O-**R**³⁰⁰ or -CH₂-O-**R**³⁰⁰,
**R**⁴ denotes H, -CH₂-O-**R**⁴⁰⁰ or -CH₂-CH₃,
**R**⁵ denotes H or **R**⁵⁰⁰,
**R**⁶ denotes H or **R**⁶⁰⁰,
**R**¹⁰⁰, **R**²⁰⁰, **R**³⁰⁰, **R**⁴⁰⁰, **R**⁵⁰⁰, **R**⁶⁰⁰ denote independently from each other structures of the general formulae (III) to (V) 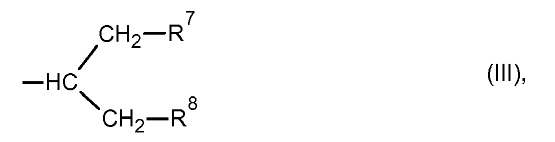 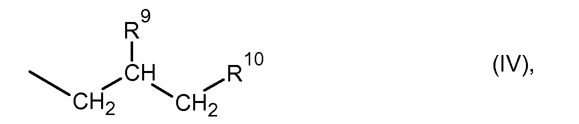 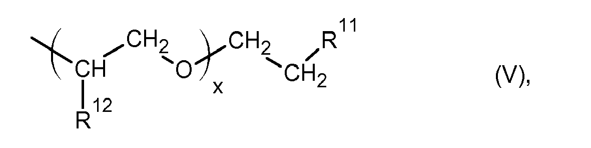 **R**⁷ denotes -OH, -O-**R**⁷⁰⁰, -O-**R**⁷⁰¹, -O-CH₂-C≡CH, _{-N3,}
**R**⁸ denotes -OH, -O-**R**⁸⁰⁰, -O-**R**⁸⁰¹, -O-CH₂-C≡CH, _{-N3,}
**R**⁹ denotes -OH, -O-R⁹⁰⁰, -O-**R**⁹⁰¹, -O-CH₂-C≡CH, _{-N3,}
**R**¹⁰ denotes -OH, -O-**R**¹⁰⁰⁰, -O-**R**¹⁰⁰¹, -O-CH₂-C≡CH, _{-N3,}
**R**¹¹ denotes -OH, -O-**R**¹¹⁰⁰, -O-R¹¹⁰¹, -O-CH₂-C≡CH, _{-N3,}
**R**¹² denotes H or -CH₃,
x is 0 to 100, particularly 1 to 10,
**R**⁷⁰⁰, **R**⁸⁰⁰, **R**⁹⁰⁰, **R**¹⁰⁰⁰, **R**¹¹⁰⁰ denote independently from each other 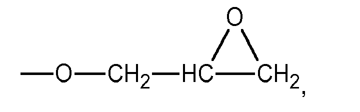 wherein **R**⁷⁰¹, **R**⁸⁰¹, **R**⁹⁰¹, **R**¹⁰⁰¹, **R**¹¹⁰¹ denote independently from each other at least one residue of the same generic structure as **R**¹⁰⁰, **R**²⁰⁰, **R**³⁰⁰, **R**⁴⁰⁰, **R**⁵⁰⁰ or **R**⁶⁰⁰,
wherein the meanings of **R**⁷ to **R**¹² may be, within the scope of the afore-mentioned generic meanings, for every single residue identical or different to that of **R**¹⁰⁹, **R**²⁰⁰, **R**³⁰⁰, **R**⁴⁰⁰, **R**⁵⁰⁰ or R⁶⁰⁰,
wherein the core structures bear at least partially differently substituted O- or C-substituted residues **R**⁷ to **R**¹¹,
or a macroemulsion of core entities according to general formula (I) and linker molecules having a structure according to general formulae (VI) or (VII) 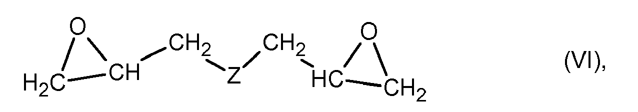 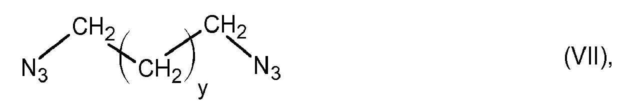 wherein Z denotes -O-, -S-S-, 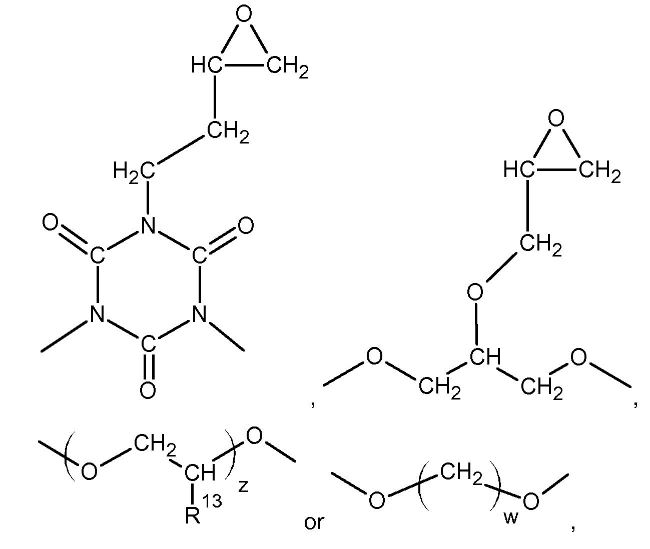 **R**¹³ denotes H or CH₃,
w, y and z are independently from each other 0 to 100, particularly 1 to 10,
by agitating the core entities or the core entities and the linker molecules in a non-solvent fluid comprising a surfactant,
b) preparing a miniemulsion of the macroemulsion formed in step a) by sonication and
c) crosslinking the core entities by forming at least one bond between at least one of the core entities and at least another of the core entities or by forming at least one first bond between a linker molecule and at least one of the core entities as well as at least one second bond between the linker molecule and another of the core entities.

11. Method for producing a nanoparticle according to any of claims 1 to 5, **characterized by** the following steps
a) preparing a polar phase of core entities having structures according to general formula (I) 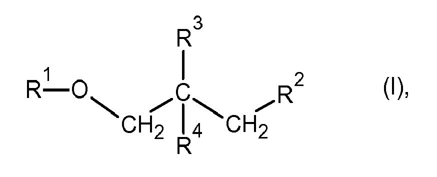 wherein, independently from one core entity to another,
**R**¹ denotes H or **R**¹⁰⁰,
**R**² denotes -OH, -O-**R**²⁰⁰ or a structure of general formula (II) 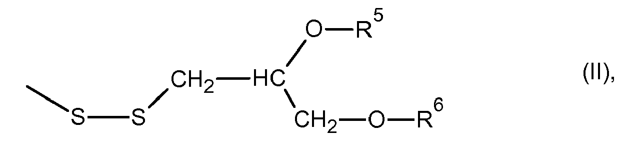 **R**³ denotes -O-**R**³⁰⁰ or -CH₂-O-**R**³⁰⁰,
**R**⁴ denotes H, -CH₂-O-**R**⁴⁰⁰ or -CH₂-CH₃,
**R**⁵ denotes H or **R**⁵⁰⁰,
**R**⁶ denotes H or **R**⁶⁰⁰,
**R**¹⁰⁰, **R**²⁰⁰, **R**³⁰⁰, **R**⁴⁰⁰, **R**⁵⁰⁰, **R**⁶⁰⁰ denote independently from each other structures of the general formulae (III) to (V) 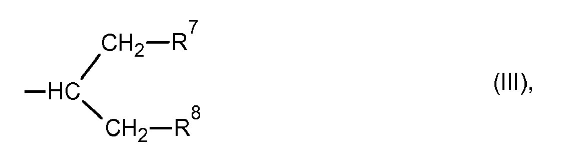 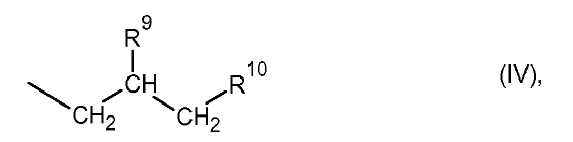 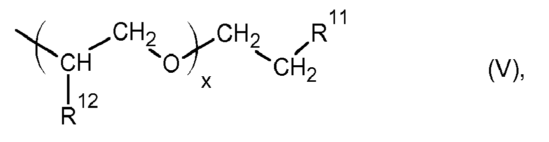 **R**⁷ denotes -OH, -O-**R**⁷⁰⁰, -O-**R**⁷⁰¹, -O-CH₂-C≡CH, _{-N3,}
**R**⁸ denotes -OH, -O-**R**⁸⁰⁰, -O-**R**⁸⁰¹, -O-CH₂-C≡CH, _{-N3},
**R**⁹ denotes -OH, -O-**R**⁹⁰⁰, -O-R⁹⁰¹, -O-CH₂-C≡CH, _{-N3,}
**R**¹⁰ denotes -OH, -O-**R**¹⁰⁰⁰, -O-R¹⁰⁰¹, -O-CH₂-C≡CH, _{-N3,}
**R**¹¹ denotes -OH, -O-**R**¹¹⁰⁰, -O-R¹¹⁰¹, -O-CH₂-C≡CH, _{-N3,}
**R**¹² denotes H or -CH₃,
x is 0 to 100, particularly 1 to 10,
**R**⁷⁰⁰, **R**⁸⁰⁰, **R**⁹⁰⁰, **R**¹⁰⁰⁰, **R**¹¹⁰⁰ denote independently from each other 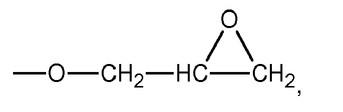 wherein **R**⁷⁰¹, **R**⁸⁰¹, **R**⁹⁰¹, **R**¹⁰⁰¹, **R**¹¹⁰¹ denote independently from each other at least one residue of the same generic structure as **R**¹⁰⁰, **R**²⁰⁰, **R**³⁰⁰, **R**⁴⁰⁰, **R**⁵⁰⁰ or **R**⁶⁰⁰,
wherein the meanings of **R**⁷ to **R**¹² may be, within the scope of the afore-mentioned generic meanings, for every single residue identical or different to that of **R**¹⁰⁰, **R**²⁰⁰, **R**³⁰⁰, **R**⁴⁰⁰, **R**⁵⁰⁰ or **R**⁶⁰⁰,
wherein the core structures bear at least partially differently substituted O- or C-substituted residues **R**⁷ to **R**¹¹,
or a polar phase of core entities according to general formula (I) and linker molecules having a structure according to general formulae (VI) or (VII) 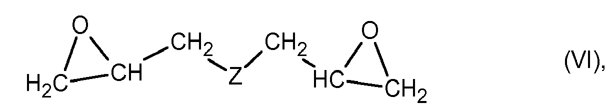 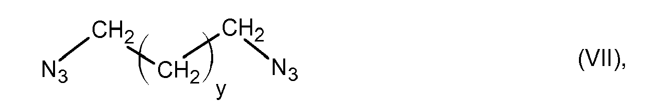 wherein Z denotes -O-, -S-S-, 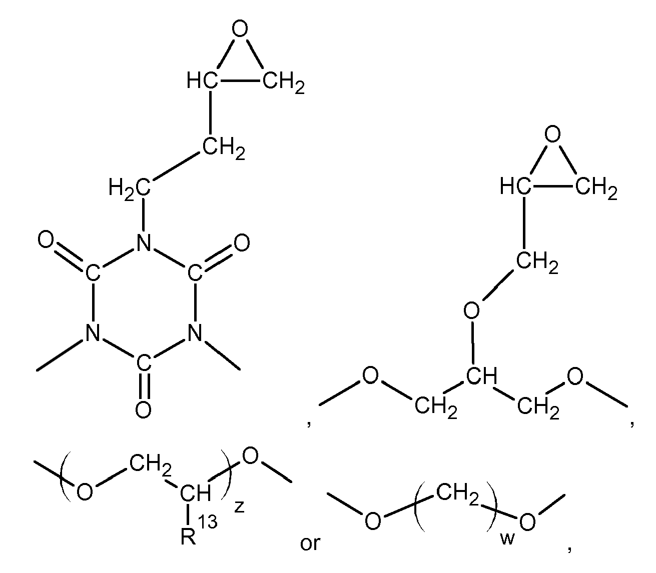 **R**¹³ denotes H or CH₃,
w, y and z are independently from each other 0 to 100, particularly 1 to 10,
by mixing the core entities or the core entities and the linker molecules and adding a highly polar solvent to this mixture,
b) forming a microemulsion by dispersing the polar phase in a high-boiling low-viscous oil with the aid of a surfactant,
c) crosslinking the core entities by forming at least one bond between at least one of the core entities and at least another of the core entities or by forming at least one first bond between a linker molecule and at least one of the core entities as well as at least one second bond between the linker molecule and another of the core entities.

12. Method according to claim 10 or 11, **characterized in that** crosslinking takes place by reaction of an alkyne-terminated core entity with an azide-terminated core entity or of an alkyne-terminated core entity with an azide-terminated linker molecule or of an alkyne-terminated linker molecule with an azide-terminated core entity.

13. Method according to claim 10 or 11, **characterized in that** crosslinking takes place by reaction of an epoxide-terminated core entity with a hydroxyl-terminated core entity or of an epoxide-terminated core entity with a hydroxyl-terminated linker molecule or of an epoxide-terminated linker molecule with a hydroxyl-terminated core entity.

14. Method according to claim 13, **characterized in that** the ratio of hydroxyl groups to epoxide groups is 6:5 to 5:1, particularly 4:3 to 5:3, particularly 3:2.

15. Method according to any of claims 10 to 14, **characterized in that** crosslinking is performed in presence of at least one catalyst chosen from the group comprising Lewis acid catalysts, acids, metals and metal salts.
